# EUROPEAN PATENT APPLICATION

(11) **EP 4 588 862 A1**
(43) Date of publication of application: **23.07.2025**
(21) Application number: 23865571.6
(22) Date of filing: 13.09.2023
(51) Int. Cl.: B65G 39/00, B65G 13/071

(54) **CONVEYANCE ROLLER**

(30) Priority: 16.09.2022 JP 2022148584
(71) Applicant: Yamauchi Corporation, Hirakata-shi, Osaka 573-1132 (JP)
(72) Inventor: HATTORI, Eiichi, Hirakata-shi, Osaka 573-1132 (JP)
(74) Representative: Müller Hoffmann & Partner
(86) International application number: PCT/JP2023/033415
(87) International publication number: WO 2024/058222

(57) **Abstract**

A conveyance roller includes a roller body, a rotary member, permanent magnets, and hysteresis materials. A pillar-shaped shaft member is inserted into the roller body and the rotary member. The roller body is provided to be able to rotate relative to the shaft member and cover outside of a center of the shaft member. The rotary member includes a driven portion provided outside the roller body in an axis direction of the shaft member and rotates relative to the shaft member by the driven portion being driven and rotated by a drive source. The permanent magnets are provided inside the roller body and are fixed to one of the rotary member and the roller body. The hysteresis materials are fixed to the other one of the rotary member and the roller body such that the hysteresis materials are able to face the permanent magnets in a radial direction of the roller body, and generate a hysteresis torque between the hysteresis materials and the permanent magnets.

## Description

### TECHNICAL FIELD

The present invention relates to a conveyance roller used in an accumulating conveyor.

### BACKGROUND ART

As a kind of roller conveyor used to convey articles in factories or the like, an accumulating conveyor is known. The accumulating conveyor has a function capable of temporarily retaining articles that are being conveyed.

For example, Patent Document 1 discloses a roller conveyor device that includes a plurality of conveyance rollers, drive means for causing the conveyance rollers to rotate, and a stopper that causes an object that is conveyed by the conveyance rollers to be temporarily retained on the conveyance rollers. Each conveyance roller includes a shaft, a roller body that is disposed at an outer periphery of the shaft via a bearing, a rotating body that is disposed to be in surface contact with an end of the roller body, and at least two rotating body bearings disposed between the rotating body and the shaft. The stopper is provided to be able to project with respect to a conveyance surface formed by the plurality of conveyance rollers.

In the roller conveyor device disclosed in Patent Document 1, the rotating body of each conveyance roller is driven and rotated by the drive means. The rotation of the rotating body is transmitted to the roller body by a frictional force caused between the rotating body and the roller body. In this manner, the roller bodies of the plurality of conveyance rollers rotate, and the object is conveyed.

Furthermore, it is possible to cause the movement of the object to stop by causing a distal end of the stopper to project with respect to the conveyance surface and bringing the distal end of the stopper into contact with the object. At this time, the rotating body rotates while sliding against the roller body. In other words, the conveyance rollers function as accumulating rollers.

### LIST OF PRIOR ART DOCUMENTS

### PATENT DOCUMENT

Patent Document 1: JP2021-123482A

### SUMMARY OF INVENTION

### TECHNICAL PROBLEM

Incidentally, when the conveyance rollers disclosed in Patent Document 1 function as accumulating rollers, the rotating bodies are worn due to the rotating bodies rotating while sliding against the roller bodies as described above. If the amount of wear of the rotating bodies increases, it is not possible to efficiently transmit the rotation from the rotating bodies to the roller bodies. In other words, the function of the conveyance rollers is degraded. In this manner, according to the configuration disclosed in Patent Document 1, the rotating bodies are worn depending on how long the conveyance rollers function as accumulating rollers. Therefore, it is difficult to improve lifetimes of the conveyance rollers.

Thus, an objective of the present invention is to provide a conveyance roller with a long lifetime capable of functioning as an accumulating roller.

### SOLUTION TO PROBLEM

A gist of the present invention is the following conveyance roller.
(1) A conveyance roller used in an accumulating conveyor including a drive source, the conveyance roller including:
   a cylindrical roller body into which a pillar-shaped shaft member is inserted such that the roller body is able to rotate relative to the shaft member and covers outside of a center of the shaft member;
   a rotary member that includes a driven portion provided outside the roller body in an axis direction of the shaft member and rotates relative to the shaft member by the shaft member being inserted such that the rotary member is able to rotate relative to the shaft member and the roller body and by the driven portion being driven and rotated by the drive source;
   a permanent magnet that is provided inside the roller body and is fixed to one of the rotary member and the roller body; and
   a hysteresis material that is fixed to the other one of the rotary member and the roller body such that the hysteresis material faces the permanent magnet and is spaced apart from the permanent magnet in a radial direction of the roller body, the hysteresis material generating a hysteresis torque between the hysteresis material and the permanent magnet.
(2) The conveyance roller according to (1) above, wherein
   the rotary member includes a cylindrical support portion that is at least partially located inside the roller body and integrally rotates with the driven portion about the shaft member as a rotation center,
   the permanent magnet is fixed to one of an outer peripheral surface of the support portion and an inner peripheral surface of the roller body, and
   the hysteresis material is fixed to the other one of the outer peripheral surface and the inner peripheral surface.
(3) The conveyance roller according to (2) above, further including:
   a first bearing that is supported by the support portion and supports the roller body such that the roller body is able to rotate relative to the rotary member; and
   a second bearing that is supported by the shaft member and supports the roller body such that the roller body is able to rotate relative to the shaft member.
(4) The conveyance roller according to (3) above, wherein
   the first bearing is supported by the rotary member such that the first bearing is able to move in the axis direction relative to the rotary member, and
   the second bearing is supported by the shaft member such that the second bearing is able to move in the axis direction relative to the shaft member.
(5) The conveyance roller according to any one of (1) to (4) above, further including:
   an adjustment mechanism that adjusts a position of the roller body in the axis direction relative to the rotary member.
(6) The conveyance roller according to any one of (1) to (4) above, wherein the permanent magnet has a cylindrical shape and has a configuration in which different poles are alternately magnetized in a circumferential direction.

### ADVANTAGEOUS EFFECTS OF INVENTION

According to the present invention, a conveyance roller with a long lifetime capable of functioning as an accumulating roller is obtained.

### BRIEF DESCRIPTION OF DRAWINGS

[Figure 1] Figure 1 is a schematic plan view illustrating an accumulating conveyor including conveyance rollers according to an embodiment of the present invention.
[Figure 2] Figure 2 is a schematic diagram illustrating each conveyance roller.
[Figure 3] Figure 3 is a diagram for explaining a method of adjusting a hysteresis torque.
[Figure 4] Figure 4 is a diagram illustrating another example of an adjustment mechanism.

### DESCRIPTION OF EMBODIMENTS

Hereinafter, a conveyance roller according to the present invention will be described in detail. The conveyance roller according to the present invention can be used as an accumulating roller in an accumulating conveyor including a plurality of rollers. First, the accumulating conveyor will be briefly described.

### (Configuration of conveyor)

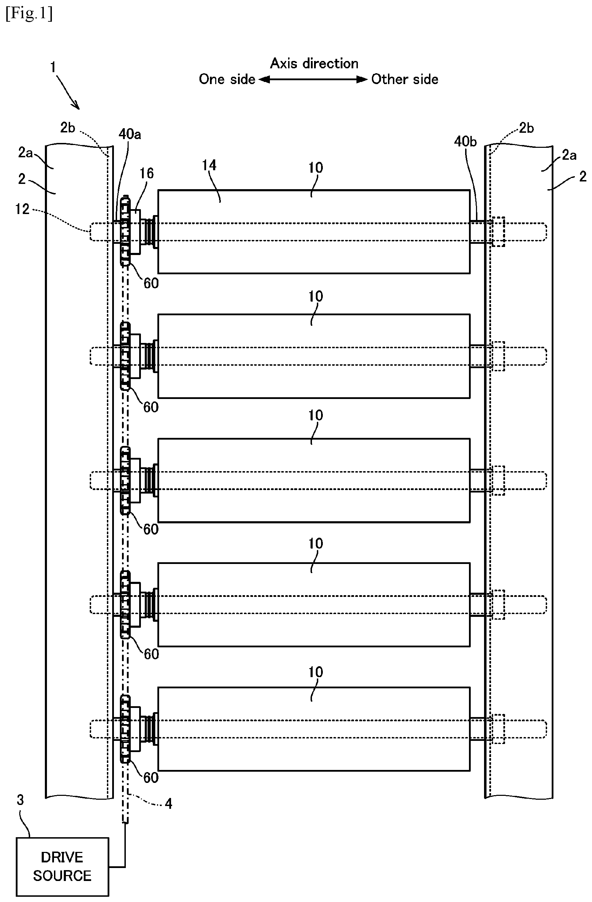

Figure 1 is a plan view illustrating an accumulating conveyor including conveyance rollers according to an embodiment of the present invention. As illustrated in Figure 1, an accumulating conveyor 1 includes a plurality of conveyance rollers 10 according to an embodiment of the present invention, a pair of frames 2 that supports the plurality of conveyance rollers 10, a drive source 3 that is for driving and rotating the plurality of conveyance rollers 10, and a transmission member 4 that is for transmitting a drive force generated by the drive source 3 to the plurality of conveyance rollers 10.

Note that although detailed description will be omitted since it is possible to use frames used in a known roller conveyor as the frames 2, each frame 2 includes an upper wall portion 2a, a lower wall portion (not illustrated) provided below the upper wall portion 2a such that the lower wall portion faces the upper wall portion 2a, and a longitudinal wall portion 2b extending in the up-down direction to connect the upper wall portion 2a and the lower wall portion such that the frame 2 has a substantially C shape in a front view in the present embodiment. Furthermore, although detailed description will be omitted since it is possible to use a drive source and a transmission member used in the known roller conveyor as the drive source 3 and the transmission member 4, the drive source 3 is, for example, an electric motor, and the transmission member 4 is, for example, a roller chain.

### (Configuration of conveyance roller)

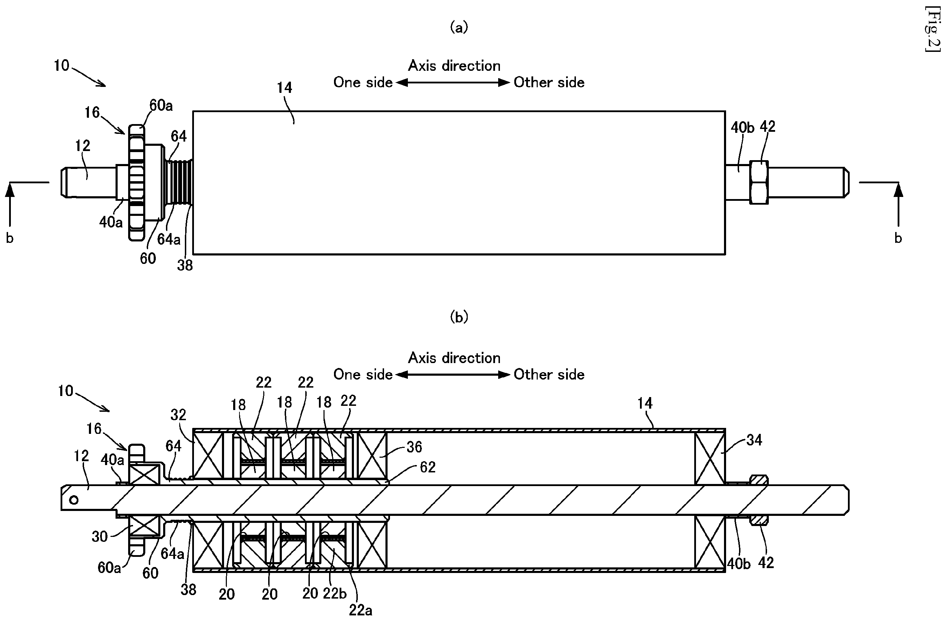

Figure 2 is a schematic diagram illustrating each conveyance roller 10, where (a) is a plan view of the conveyance roller 10, and (b) is a sectional view illustrating the portion b-b. As illustrated in Figure 2(b), the conveyance roller 10 includes a shaft member 12, a roller body 14, a rotary member 16, a plurality of permanent magnets 18, and a plurality of hysteresis materials 20.

In the present embodiment, the shaft member 12 has a substantially columnar shape. As illustrated in Figure 1, both end portions of the shaft member 12 are supported by the frames 2 (longitudinal wall portions 2b). In the present embodiment, the shaft member 12 is attached to the pair of frames 2 in a state where rotation relative to the pair of frames 2 is restricted. Note that since a method of attaching the shaft member 12 to the frames 2 is similar to a method of attaching a shaft member to frames in a known accumulating conveyor, detailed description will be omitted.

As illustrated in Figures 1 and 2, the roller body 14 has a cylindrical shape. The roller body 14 is made of, for example, a non-magnetic material. In the present embodiment, the shaft member 12 is inserted into the roller body 14 such that the shaft member 12 penetrates through the roller body 14. More specifically, the shaft member 12 is inserted into the roller body 14 such that the outside of the center of the shaft member 12 in the axis direction (length direction) is covered with the roller body 14. Although details will be described later, the roller body 14 is supported by the shaft member 12 and the rotary member 16 such that the roller body 14 can rotate relative to the shaft member 12 and the rotary member 16.

As illustrated in Figure 2, the rotary member 16 has a substantially cylindrical shape. In the present embodiment, the shaft member 12 is inserted into the rotary member 16 such that the shaft member 12 penetrates through the rotary member 16. In the present embodiment, the rotary member 16 is supported by the shaft member 12 such that the rotary member 16 can move in the axis direction (length direction) of the shaft member 12. Note that in a case where the axis direction is simply referred to in the following description, it means the axis direction (length direction) of the shaft member 12.

The rotary member 16 includes a sprocket portion 60, a support portion 62, and an adjustment portion 64. The sprocket portion 60, the support portion 62, and the adjustment portion 64 are integrally formed. In the present embodiment, the sprocket portion 60 corresponds to the driven portion.

The sprocket portion 60 is provided outside the roller body 14 in the axis direction. A plurality of teeth 60a is provided at an outer peripheral portion of the sprocket portion 60. The support portion 62 has a cylindrical shape. The support portion 62 is provided inside the roller body 14. More specifically, the support portion 62 is provided coaxially with the shaft member 12 and the roller body 14.

The adjustment portion 64 has a cylindrical shape. The adjustment portion 64 is provided between the sprocket portion 60 and the support portion 62 in the axis direction. A plurality of annular grooves 64a is formed in an outer peripheral surface of the adjustment portion 64.

The rotary member 16 is supported by the shaft member 12 such that the rotary member 16 can rotate relative to the shaft member 12. In the present embodiment, a bearing 30 is provided inside the sprocket portion 60. Note that it is possible to use various known bearings (a rolling bearing, a sliding bearing, and the like) as the bearing 30. The same applies to bearings 32, 34, and 36, which will be described later.

As illustrated in Figure 1, the transmission member (roller chain) 4 is stretched over the sprocket portion 60 of each conveyance roller 10. A drive force generated by the drive source 3 is transmitted to each of the sprocket portions 60 of the plurality of conveyance rollers 10 via the transmission member 4. In other words, the plurality of sprocket portions 60 is driven and rotated at the same time by the drive source 3. As a result, the rotary member 16 rotates relative to the shaft member 12 in each conveyance roller 10.

As illustrated in Figure 2(b), an end portion of the roller body 14 on one side in the axis direction is supported by the support portion 62 of the rotary member 16 via the bearing 32, and an end portion of the roller body 14 on the other side in the axis direction is supported by the shaft member 12 via the bearing 34. In this manner, the roller body 14 can rotate relative to the shaft member 12 and the rotary member 16. In the present embodiment, the bearing 32 corresponds to the first bearing, and the bearing 34 corresponds to the second bearing. Note that in the present embodiment, the roller body 14 is also supported by the bearing 36 provided at a distal end portion of the support portion 62 (an end portion of the support portion 62 on the other side in the axis direction).

In the present embodiment, the bearing 32, the bearing 34, and the bearing 36 are attached to the roller body 14 such that the bearing 32, the bearing 34, and the bearing 36 cannot move in the axis direction relative to the roller body 14. Furthermore, the bearing 32 and the bearing 36 are supported by the support portion 62 such that the bearing 32 and the bearing 36 can move in the axis direction relative to the support portion 62 (rotary member 16), and the bearing 30 and the bearing 34 are supported by the shaft member 12 such that the bearing 30 and the bearing 34 can move in the axis direction relative to the shaft member 12.

As illustrated in Figure 2, a ring-shaped locking member 38 is fitted into one of the plurality of grooves 64a of the adjustment portion 64. As the locking member 38, it is possible to use, for example, a known retaining ring. A cylindrical collar 40a is fitted onto the shaft member 12 on the one side of the rotary member 16 in the axis direction. As illustrated in Figure 1, the collar 40a is provided between the longitudinal wall portion 2b of the frame 2 and the rotary member 16. Although detailed description will be omitted, an end portion of the collar 40a on the one side in the axis direction is provided such that the end portion can be locked by the longitudinal wall portion 2b of the frame 2, and an end portion of the collar 40a on the other side in the axis direction is provided such that the end portion can be locked by the bearing 30, in the present embodiment. In such a configuration, movement of the rotary member 16 to the one side in the axis direction relative to the shaft member 12 is restricted by the bearing 30, the collar 40a, and the longitudinal wall portion 2b.

Furthermore, a cylindrical collar 40b is fitted onto the shaft member 12 on the other side of the bearing 34 in the axis direction. Furthermore, a fastening member 42 is fitted onto the shaft member 12 on the other side of the collar 40b in the axis direction. As the fastening member 42, a nut is used, for example. In this case, a screw groove for attaching the nut is formed in an outer peripheral surface of the shaft member 12.

In the present embodiment, it is possible to press the collar 40b against the bearing 34 by fastening the fastening member 42. In this manner, the roller body 14 and the bearing 32 attached to the roller body 14 are pressed toward the one side in the axis direction relative to the shaft member 12. As a result, the bearing 32 is locked by the locking member 38 attached to the adjustment portion 64. In this manner, the position of the roller body 14 in the axis direction relative to the rotary member 16 is fixed. Note that the rotary member 16 locked by the bearing 32 via the locking member 38 is also pressed on the one side in the axis direction by the roller body 14 and the bearing 32 being pressed on the one side in the axis direction. However, movement of the rotary member 16 to the one side in the axis direction relative to the shaft member 12 is restricted by the bearing 30, the collar 40a, and the longitudinal wall portion 2b as described above. With such a configuration, it is possible to appropriately fasten the fastening member 42. Although details will be described later, the plurality of grooves 64a, the collar 40b, and the fastening member 42 function as an adjustment mechanism that adjusts the position of the roller body 14 in the axis direction relative to the rotary member 16 in the present embodiment.

The plurality of permanent magnets 18 is fixed to an outer peripheral surface of the support portion 62. In the present embodiment, the plurality of permanent magnets 18 is fixed to the outer peripheral surface of the support portion 62 such that the permanent magnets are spaced apart from each other in the axis direction. Furthermore, the permanent magnets 18 each have a cylindrical shape and have a configuration in which different poles are alternately magnetized in the circumferential direction in the present embodiment.

Any known magnet can be used for the permanent magnet 18, such as a ferrite magnet and a rare earth magnet. From the viewpoint of size reduction of the conveyance roller 10 and an improvement in hysteresis torque, which will be described later, a rare earth magnet such as an Nd-Fe-B-based magnet, an Sm-Fe-N-based magnet, and an Sm-Co-based magnet, for example, are preferably used for the permanent magnet 18.

The plurality of hysteresis materials 20 is fixed to the roller body 14 such that the hysteresis materials 20 face the plurality of permanent magnets 18 in the radial direction of the roller body 14 and are spaced apart from the plurality of permanent magnets 18 in the radial direction of the roller body 14. In the present embodiment, the hysteresis materials 20 have a cylindrical shape and are fixed to an inner peripheral surface of the roller body 14 via fixation members 22. Each fixation member 22 includes a cylindrical outer peripheral portion 22a and a projecting portion 22b projecting inward in the radial direction from the outer peripheral portion 22a. The hysteresis materials 20 are fixed to distal end portions of the projecting portions 22b. The fixation members 22 are made of, for example, a resin material.

The hysteresis materials 20 are each made of, for example, a semi-rigid magnetic material. For example, specifically, it is possible to manufacture the hysteresis material 20 by subjecting a semi-rigid magnetic material such as an Fe-Cr-Co-based alloy or an Fe-Co-based alloy to predetermined magnetic field treatment. In the present embodiment, a residual magnetic flux density of the hysteresis material 20 is preferably 0.7T or more, and a coercive force is preferably 10 kA/m or more.

### (Operations of conveyance rollers)

The rotary member 16 of each conveyance roller 10 is driven and rotated by the drive source 3 when an article is transferred by the accumulating conveyor 1. In this manner, the permanent magnets 18 rotate about the shaft member 12 as a rotation center, and a hysteresis torque is generated between the permanent magnets 18 and the hysteresis materials 20, in each conveyance roller 10. As a result, the plurality of hysteresis materials 20, the plurality of fixation members 22, and the roller body 14 rotate about the shaft member 12 as a rotation center in conjunction with the rotation of the plurality of permanent magnets 18. It is possible to transfer the article by causing the roller bodies 14 of the plurality of conveyance roller 10 to rotate in this manner.

On the other hand, in a case where the transfer of the article is stopped by a stopper, which is not illustrated, on the accumulating conveyor 1, it is possible to block the transmission of the rotation from the rotary member 16 to the roller body 14. Specifically, once a load imparted on the roller body 14 from the article exceeds a torque (magnetic suction force) generated between the plurality of permanent magnets 18 and the plurality of hysteresis materials 20, the rotary member 16 and the plurality of permanent magnets 18 idle relative to the roller body 14 and the plurality of hysteresis materials 20. In this manner, the conveyance roller 10 according to the present embodiment functions as an accumulating roller.

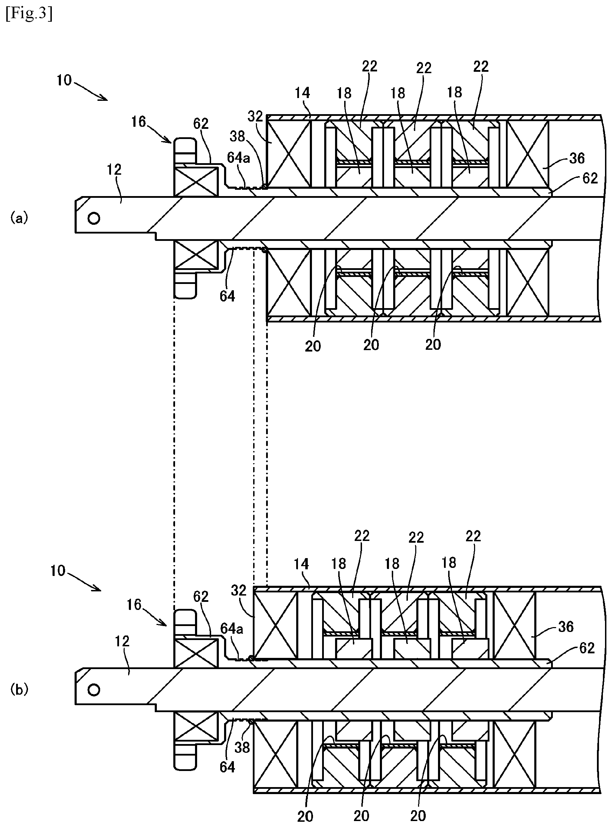

Note that it is possible to adjust the magnitude of the hysteresis torque generated between the plurality of permanent magnets 18 and the plurality of hysteresis materials 20 by adjusting the position of the roller body 14 in the axis direction relative to the rotary member 16 in the present embodiment. Figure 3 is a diagram for explaining a method of adjusting the hysteresis torque. Note that Figure 3 illustrates a peripheral portion of the rotary member 16 in the conveyance roller 10.

As described above, the plurality of grooves 64a is formed in the outer peripheral surface of the adjustment portion 64 of the rotary member 16. In the present embodiment, it is possible to change the position of the roller body 14 relative to the rotary member 16 by changing the groove 64a into which the locking member 38 is fitted as illustrated in Figure 3. In the conveyance roller 10 illustrated in Figure 3(a), for example, the locking member 38 is fitted into the groove 64a on the side closest to the support portion 62 from among the plurality of grooves 64a. On the other hand, the locking member 38 is fitted into the third groove 64a from the side of the support portion 62 from among the plurality of grooves 64a in the conveyance roller 10 illustrated in Figure 3(b). As described above, the position of the roller body 14 in the axis direction relative to the rotary member 16 is fixed by fastening the fastening member 42 (see Figure 2) and causing the locking member 38 to lock the bearing 32 in the present embodiment. Therefore, the roller body 14 is located on the side closer to the support portion 62 in the axis direction in the conveyance roller 10 illustrated in Figure 3(b) as compared with the conveyance roller 10 illustrated in Figure 3(a).

In the present embodiment, the plurality of permanent magnets 18 is fixed to the rotary member 16 (support portion 62), and the plurality of hysteresis materials 20 is fixed to the roller body 14. Therefore, it is possible to adjust a facing area between the permanent magnets 18 and the hysteresis materials 20 in the radial direction of the roller body 14 by adjusting the position of the roller body 14 in the axis direction relative to the rotary member 16 as described above. As a result, it is possible to adjust the magnitude of the hysteresis torque acting between the permanent magnets 18 and the hysteresis materials 20.

### (Effects of conveyance roller)

As described above, it is possible to cause the roller body 14 to rotate by the hysteresis torque acting between the permanent magnets 18 and the hysteresis materials 20 in the conveyance roller 10 according to the present embodiment. In this case, it is possible to transmit rotation between the rotary member 16 and the roller body 14 without bringing the permanent magnets 18 and the hysteresis materials 20 into contact with each other. In this manner, degradation due to wear like degradation that may occur in a conventional accumulating roller that transmits rotation by a frictional force does not occur. As a result, it is possible to improve a lifetime of the conveyance roller.

Furthermore, the torque acting on the roller body increases immediately before members that transmit rotation start to slide against each other (that is, immediately before a change from a static friction state to a dynamic friction state) in the accumulating roller with the configuration in which the rotation is transmitted by the frictional force. Therefore, impact may be imparted on an article from the stopper when the transfer of the article is stopped in the accumulating conveyor. On the contrary, since the permanent magnets 18 and the hysteresis materials 20 are not brought into contact with each other as described above in the conveyance roller 10 according to the present embodiment, it is possible to prevent the torque imparted on the roller body 14 from increasing when the rotary member 16 idles relative to the roller body 14. Therefore, it is possible to prevent impact from being imparted on the article from the stopper when the transfer of the article is stopped in the accumulating conveyor 1.

Note that reducing the torque (setting value) to be imparted on the roller body from the drive source in order to prevent impact from being imparted on the article from the stopper when the transfer of the article is stopped in the accumulating roller with the configuration in which rotation is transmitted by the frictional force is conceivable. However, there is a concern that the torque may be insufficient when the accumulating roller is driven again and a delay may occur in the transfer of the article in this case. In this regard, the permanent magnets 18 and the hysteresis materials 20 are not brought into contact with each other as described above in the conveyance roller 10 according to the present embodiment, and it is thus possible to prevent an increase in torque to be imparted on the roller body 14 when the transfer of the article is stopped. Therefore, it is possible to prevent impact from being imparted on the article from the stopper when the transfer of the article is stopped without reducing the torque (setting value) to be imparted on the roller body 14 from the drive source 3. In other words, it is possible to cause the conveyance roller 10 to appropriately function as an accumulating roller while imparting a sufficient torque on the roller body 14 from the drive source 3. In this manner, it is possible to prevent the torque from being insufficient when the conveyance roller 10 is driven again and to smoothly transfer the article.

Furthermore, a mechanism (the permanent magnets 18 and the hysteresis materials 20) to generate a hysteresis torque is provided inside the roller body 14 in the conveyance roller 10 according to the present embodiment. Furthermore, the end portion of the roller body 14 on the one side is supported by the rotary member 16, and the end portion of the roller body 14 on the other side is supported by the shaft member 12.

With such a configuration, it is possible to accommodate the permanent magnets 18 and the hysteresis materials 20 inside the roller body 14 such that the permanent magnets 18 and the hysteresis materials 20 are not exposed from the roller body 14. In this manner, it is possible to prevent dust and the like generated when the article is transferred from adhering to the permanent magnets 18 and the hysteresis materials 20. As a result, it is possible to cause the conveyance roller 10 to appropriately function as an accumulating roller.

In addition, since it is possible to accommodate the permanent magnets 18 and the hysteresis materials 20 inside the roller body 14, it is not necessary to dispose the permanent magnets 18 and the hysteresis materials 20 to be aligned with the roller body 14 in the axis direction. Therefore, it is possible to effectively use the space around the shaft member 12 and to extend the length of the roller body 14. In particular, the roller body 14 is provided to cover the center of the shaft member 12 in the present embodiment, and it is thus possible to sufficiently extend the length of the roller body 14. In this manner, it is possible to sufficiently increase the area of the conveyance surface to transfer the article in the roller body 14 and to thereby stably transfer the article.

Furthermore, the end portion of the roller body 14 on the one side is supported by the rotary member 16, and the end portion of the roller body 14 on the other side is supported by the shaft member 12 as described above in the conveyance roller 10 according to the present embodiment. In this case, it is not necessary to extend the rotary member 16 up to the end portion of the roller body 14 on the other side in the axis direction, and it is thus possible to shorten the length of the rotary member 16 in the axis direction. As a result, it is possible to reduce the weight of the conveyance roller 10.

### (Other embodiments)

Although the case where the conveyance roller 10 includes the three permanent magnets 18 has been described in the aforementioned embodiment, the number of permanent magnets 18 included in the conveyance roller 10 may be two or less or four or more. Furthermore, since the hysteresis materials 20 are provided to face the permanent magnets 18, the number of hysteresis materials 20 may also be two or less or four or more similarly to the permanent magnets 18.

Although five conveyance rollers 10 are illustrated in Figure 1, the number of conveyance rollers 10 included in the accumulating conveyor 1 (the number of conveyance rollers functioning as accumulating rollers) may be four or less or six or more. For example, only one roller from among a plurality of rollers included in the accumulating conveyor 1 may function as an accumulating roller. In this case, the other rollers may be, for example, free rollers.

Although the hysteresis materials 20 are fixed to the roller body 14 via the fixation members 22 in the aforementioned embodiment, the hysteresis materials 20 may be fixed directly to the roller body 14.

Although the case where the permanent magnets 18 are fixed to the outer peripheral surface of the support portion 62 of the rotary member 16 and the hysteresis materials 20 are fixed to the inner peripheral surface of the roller body 14 has been described in the aforementioned embodiment, the permanent magnets may be fixed to the inner peripheral surface of the roller body 14, and the hysteresis materials may be fixed to the outer peripheral surface of the support portion 62.

Although the case where either the permanent magnets or the hysteresis materials are fixed to the outer peripheral surface of the support portion 62 has been described in the aforementioned embodiment, a permanent magnet or a hysteresis material with a cylindrical shape may be provided instead of the support portion 62. In this case, the hysteresis materials or the permanent magnets may be fixed to the roller body 14 such that the hysteresis materials or the permanent magnets face the permanent magnet or the hysteresis material.

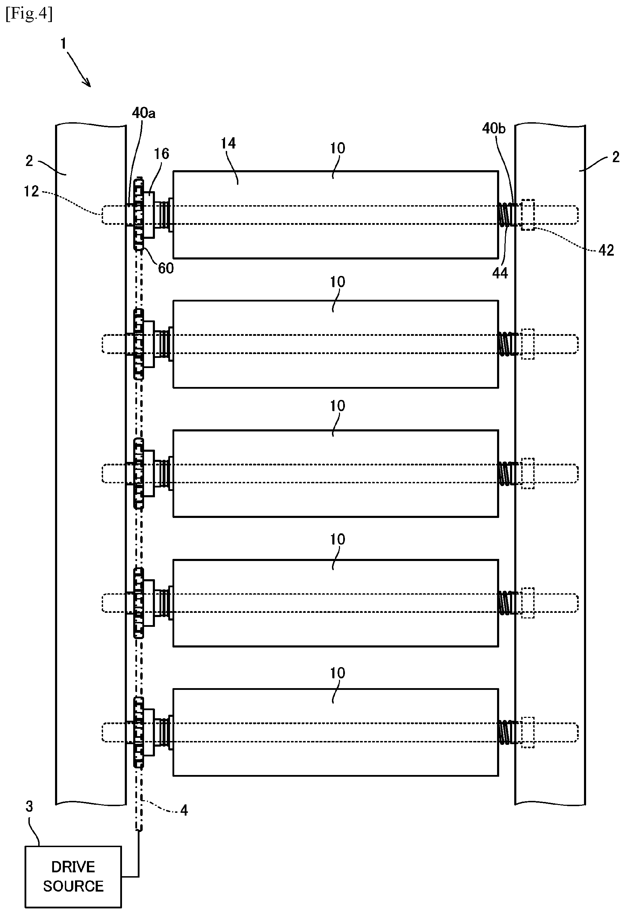

Although the bearing 34 is pressed by the collar 40b when the position of the roller body 14 relative to the rotary member 16 is adjusted in the aforementioned embodiment, an elastic member 44 such as a ring spring may be provided between the collar 40b and the bearing 34 as illustrated in Figure 4, and the bearing 34 may be pressed by the elastic member 44. In this case, the plurality of grooves 64a, the collar 40b, the fastening member 42, and the elastic member 44 function as the adjustment mechanism that adjusts the position of the roller body 14 in the axis direction relative to the rotary member 16.

Furthermore, although the case where the position of the roller body 14 relative to the rotary member 16 is adjusted by changing the position of the groove 64a into which the locking member 38 is fitted has been described in the aforementioned embodiment, means for adjusting the position of the roller body 14 is not limited to the aforementioned example, and various known means can be used. For example, a first fixation member (for example, a known set collar) may be attached to the adjustment portion 64 instead of the plurality of grooves 64a of the adjustment portion 64 and the locking member 38, and a second fixation member (for example, a known set collar) may be attached to the shaft member 12 instead of the collar 40b and the fastening member 42. The first fixation member is configured to be able to be fixed to the adjustment portion 64 at an arbitrary position in the axis direction, and the second fixation member is configured to be able to be fixed to the shaft member 12 at an arbitrary position in the axis direction. In this case, it is possible to adjust the position of the roller body 14 by providing the first fixation member and the second fixation member to sandwich the bearings 32 and 34 from both sides in the axis direction and adjusting the positions of the first fixation member and the second fixation member in the axis direction.

Although the case where a roller chain is used as the transmission member 4 has been described in the aforementioned embodiment, the transmission member 4 is not limited to the roller chain. For example, various belts may be used as the transmission member 4. In this case, a pulley portion may be provided as a driven portion instead of the sprocket portion 60.

Although the case where the one transmission member 4 drives and rotates the rotary members 16 of the plurality of conveyance rollers 10 has been described in the aforementioned embodiment, a plurality of transmission members may be used to drive and rotate the rotary members 16 of the plurality of conveyance rollers 10. For example, one transmission member may drive and rotate the rotary member 16 of one arbitrary conveyance roller 10 from the drive source 3, and the rotation of the rotary member 16 may be transmitted to the rotary members 16 of the other conveyance rollers 10 using the other transmission members.

Furthermore, although detailed description is omitted, the drive source and the plurality of rotary members may be configured such that the plurality of rotary members can be rotated using a magnetic attractive force or a repulsive force.

### INDUSTRIAL APPLICABILITY

According to the present invention, a conveyance roller with a long lifetime capable of functioning as an accumulating roller is obtained.

### REFERENCE SIGNS LIST

1 Accumulating conveyor
10 Conveyance roller
12 Shaft member
14 Roller body
16 Rotary member
18 Permanent magnet
20 Hysteresis material
30, 32, 34, 36 Bearing
60 Sprocket portion
62 Support portion

## Claims

1. A conveyance roller used in an accumulating conveyor including a drive source, the conveyance roller comprising:
a cylindrical roller body into which a pillar-shaped shaft member is inserted such that the roller body is able to rotate relative to the shaft member and covers outside of a center of the shaft member;
a rotary member that includes a driven portion provided outside the roller body in an axis direction of the shaft member and rotates relative to the shaft member by the shaft member being inserted such that the rotary member is able to rotate relative to the shaft member and the roller body and by the driven portion being driven and rotated by the drive source;
a permanent magnet that is provided inside the roller body and is fixed to one of the rotary member and the roller body; and
a hysteresis material that is fixed to the other one of the rotary member and the roller body such that the hysteresis material faces the permanent magnet and is spaced apart from the permanent magnet in a radial direction of the roller body, the hysteresis material generating a hysteresis torque between the hysteresis material and the permanent magnet.

2. The conveyance roller according to claim 1, wherein
the rotary member includes a cylindrical support portion that is at least partially located inside the roller body and integrally rotates with the driven portion about the shaft member as a rotation center,
the permanent magnet is fixed to one of an outer peripheral surface of the support portion and an inner peripheral surface of the roller body, and
the hysteresis material is fixed to the other one of the outer peripheral surface and the inner peripheral surface.

3. The conveyance roller according to claim 2, further comprising:
a first bearing that is supported by the support portion and supports the roller body such that the roller body is able to rotate relative to the rotary member; and
a second bearing that is supported by the shaft member and supports the roller body such that the roller body is able to rotate relative to the shaft member.

4. The conveyance roller according to claim 3, wherein
the first bearing is supported by the rotary member such that the first bearing is able to move in the axis direction relative to the rotary member, and
the second bearing is supported by the shaft member such that the second bearing is able to move in the axis direction relative to the shaft member.

5. The conveyance roller according to any one of claims 1 to 4, further comprising:
an adjustment mechanism that adjusts a position of the roller body in the axis direction relative to the rotary member.

6. The conveyance roller according to any one of claims 1 to 4, wherein the permanent magnet has a cylindrical shape and has a configuration in which different poles are alternately magnetized in a circumferential direction.
